# EUROPÄISCHE PATENTSCHRIFT

(11) **EP 0 463 289 B1**
(45) Veröffentlichungstag und Bekanntmachung des Hinweises auf die Patenterteilung: **25.01.1995**
(21) Anmeldenummer: 91102307.5
(22) Anmeldetag: 19.02.1991
(51) Int. Cl.: B01D 35/147, F16K 15/02, F16K 17/04

(54) **Ventil, insbesondere für den Schmierölfilter einer Brennkraftmaschine**
Valve, especially for the lubricating oil filter of a combustion engine
Vanne, notamment pour filtre d'huile de graissage d'un moteur à combustion

(30) Priorität: 23.06.1990 DE 9007022 U; 11.07.1990 DE 9010459 U; 09.01.1991 DE 9100194 U
(43) Veröffentlichungstag der Anmeldung: 02.01.1992
(73) Patentinhaber: FILTERWERK MANN & HUMMEL GMBH, D-71631 Ludwigsburg (DE)
(72) Erfinder: Bauer, Sascha, W-7159 Auenwald (DE); Habiger, Heinz, W-7140 Luwigsburg (DE); Mack, Klaus, W-7140 Ludwigsburg (DE); Pavlin, Jaroslav, W-7149 Freiberg (DE)
(74) Vertreter: Voth, Gerhard, Dipl.-Ing.

(56) Entgegenhaltungen:
- EP-A- 0 309 137
- DE-A- 730 002
- GB-A- 655 560
- US-A- 2 904 065
- US-A- 3 913 615
- US-A- 4 228 820

## Beschreibung

Die Erfindung betrifft ein Ventil nach dem Oberbegriff des Hauptanspruchs. Aus dem DE-U- 18 95 630 ist ein flüssigkeitsfilter für Hydraulikanlagen in Kraftfahrzeugen bekannt, welches ein Überströmventil aufweist. Dieses Ventil besteht aus einer Ventilplatte, für die eine mit einem Gehäuse durch Falzung verbundene Ventilsitzscheibe vorgesehen ist. Mit dieser Ventilsitzscheibe ist eine seitlich offene Ventilhaube verbunden, gegen deren Boden sich eine auf die Ventilplatte wirkende Ventilfeder abstützt.

Solche Ventile dienen im allgemeinen dazu, bei einem zu stark verschmutzten und austauschbedürftigen Filter den Ölkreislauf aufrechtzuerhalten, wobei das Ventil ab einem bestimmten Öldruck, der bei dieser Betriebsart auftritt, öffnet. Das in der Literaturstelle beschriebene Ventil ist vollständig in das Gehäuse des Filters eingebördelt, so daß ein Austausch des Ventils, beispielsweise bei defektem Ventil oder Wartungsarbeiten nicht möglich ist. Außerdem ist der Ventilsitz durch die Ventilplatte einerseits und eine Ventilsitzscheibe andererseits, welche eine umgebördelte Blechscheibe ist, gebildet. Bei einem solchen Aufbau besteht die Gefahr, daß bei einer nicht völlig planen Ventilsitzscheibe das Ventil auch im Normalbetrieb undicht ist und damit ungereinigtes Schmieröl auf die Reinölseite des Filters gelangen kann.

Dokumente US-A-3 913 615 und US-A-2 904 065 weisen dieselben Nachteile auf. Sie stellen den im Oberbegriff der Ansprüche 1 und 9 beschriebenen Stand der Technik dar.

Der Erfindung liegt deshalb die Aufgabe zugrunde, die genannten Nachteile zu vermeiden und somit ein Ventil zu schaffen, das ein sicheres Abdichten gewährleistet, das wenig Bauteile aufweist, kostengünstig herzustellen, sowie leicht austauschbar ist.

Diese Aufgabe wird durch die kennzeichnenden Merkmale der nebengeordneten Ansprüche gelöst.

Wesentlicher Vorteil der Erfindung gemäß Anspruch 1 ist die Schaffung eines Ventils zur Umgehung des Schmutzölfilters, welches eine Ventilhaube aufweist, die mit einem umlaufenden Bördelrand versehen ist. Dies hat den Vorteil, daß die Ventilhaube über den gesamten Umfang des Ventilkörpers angebördelt und damit ein Verzug des Ventilkörpers durch ungleichförmige Bördelflächen, insbesondere auch beim Einspressen des Ventilkörpers in eine hierfür vorgesehene Aufnahme, vermieden wird. Da der Ventilkörper ein massiv zylindrisches Teil ist, zeigt der Ventilsitz eine bessere Widerstandsfähigkeit gegen Verformungen, so daß auch damit ein sicheres Abdichten gewährleistet ist.

Insbesondere bei einem Rücklaufsperrventil ist ein Leckageverlust des Ventils nicht zulässig. Solche Rücklaufsperrventile werden dazu eingesetzt, um beim Stillstand des Motors ein Leerlaufen des Ölfilters zu verhindern und damit zu erreichen, daß beim Starten des Motors in sehr kurzer Zeit der Öldruck im gesamten System aufgebaut werden kann.

Ein weiterer Vorteil der Erfindung besteht darin, daß die Ventilplatte an der Ventilhaube geführt ist. Ein Abkippen der Ventilplatte bzw. ein Versatz zu der Dichtfläche wird damit wirksam verhindert.

Gemäß einer Ausgestaltung der Erfindung ist der Ventilsitz an dem Ventilkörper mit einer kegeligen Fläche versehen, während der mit dieser kegeligen Fläche zusammenwirkende Bereich der Ventilplatte eine leicht ballige Oberfläche aufweist. Diese Flächenpaarung an dem Ventilsitz zeigt ein sehr gutes Abdichtungsverhalten.

Die Einzelteile des Ventils sind in besonders vorteilhafter Weise aus unterschiedlichen Werkstoffen gefertigt. So besteht der Ventilkörper aus Aluminium bzw. einer Aluminiumlegierung. Dies hat den Vorteil, daß die Ventilhaube, welche beispielsweise aus einem Kunststoffspritzgußteil besteht, in einfacher und zuverlässiger Weise an den Ventilkörper angebördelt werden kann.

Die Ventilplatte ist zweckmäßigerweise ebenfalls aus einem Kunststoffspritzgußteil hergestellt. Ein Kunststoffteil erhöht weiterhin die Zuverlässigkeit der Abdichtung zwischen Ventilkörper und Ventilplatte. Außerdem sind komplizierte Strukturen der Ventilplatte in einem Kunststoffspitzgußteil leicht herstellbar.

Weiterbildungsgemäß ist der Ventilkörper in seinem äußeren Umfang mit einem Schraubgewinde oder mit einer Nut zum Einlegen eines O-Rings versehen. Sowohl das Befestigen des Ventilkörpers über ein Schraubgewinde als auch über eine O-Ring-Abdichtung gewährleistet einen einfachen Austausch des Ventils, beispielsweise bei Wartungsarbeiten.

Es besteht auch die Möglichkeit, den Ventilkörper in die Ventilaufnahme einzupressen. Dies ist dort zweckmäßig, wo ein Austausch des Ventils nicht vorgesehen ist und besonders kostengünstig der Einbau eines Ventils vorgenommen werden muß. Zum Einpressen eines solchen Ventils hat es sich auch bewährt, die Einpreßflächen des Ventils und/oder des Aufnahmeteils leicht konisch auszubilden (Kegelwinkel ca. 4-5°).

Wesentlicher Vorteil der Erfindung gemäß dem nebengeordneten Anspruch 6 ist die Schaffung eines Ventils, insbesondere für das Schmierkraftfilter einer Brennkraftmaschine, welches keine Ventilhaube benötigt und welches ohne Materialumformung montiert werden kann.

Diese Lösung zeichnet sich vor allem dadurch aus, daß die Führung der Ventilplatte durch den Ventilkörper selbst erfolgt; damit können zusätzliche Führungselemente entfallen.

Gemäß einer Weiterbildung der Erfindung wird vorgeschlagen, die Endscheibe über eine Schnappverbindung mit der Ventilplatte zu verbinden. Eine solche Schnappverbindung kann als Renk- oder Bajonettverschluß ausgeführt sein. Es hat sich beispielsweise bewährt, das Ende der Führungsflächen der Ventilplatte mit einem T-förmigen Ansatz zu versehen. Die Endscheibe ist mit einem über deren Mittelpunkt verlaufenden Schlitz ausgestattet. Beim Zusammebau von Endscheibe und Ventilplatte greift der T-förmige Ansatz in den Schlitz, durch eine 90°-Drehung der Endscheibe wird diese in die Raststellung gebracht und somit gegen axiale oder radiale Verschiebung gesichert.

Die Endscheibe ist vorteilhafterweise mit mehreren Durchbrüchen versehen. Dies hat den Vorteil, daß bei einem geöffneten Ventil der Strömungswiderstand verringert wird.

Gemäß einer weiteren vorteilhaften Ausgestaltung ist der Ventilkörper aus Aluminium.. Dieser läßt sich in einer Bohrung eines Schmierkraftfilters, beispielsweise mittels einer Preßsitzverbindung oder einer Schraubverbindung, befestigen. Die Ventilplatte sowie die Endscheibe bestehen zweckmäßigerweise aus Kunststoffspritzguß.

Vorteil der Erfindung gemäß dem nebengeordneten Anspruch 9 ist die Schaffung eines Ventils zur Umgehung des Schmierölfilters, welches als Einschraubteil ausgestaltet ist und damit zum einen bei Wartungsarbeiten ersetzt werden kann und zum anderen die Möglichkeit besteht, das Ventil durch Austausch an unterschiedliche Öffnungsdrücke anzupassen. Da der Ventilkörper im wesentlichen ein massiv-zylindrisches Teil ist, zeigt auch der Ventilsitz eine bessere Widerstandsfähigkeit gegen Verformungen, so daß ein sicheres Abdichten gewährleistet ist.

Der Ventilkörper kann auch anstelle eines Schraubgewindes einen Bajonettverschluß oder eine glatte Außenfläche mit einer O-Ringdichtung aufweisen, wobei in diesem Fall das Ventil durch einen Sprengring in seiner Lage gehalten wird. Grundsätzlich ist bei allen genannten Befestigungsarten ein Austausch des Ventils mit einfachen Mitteln möglich.

Eine Weiterbildung der Erfindung sieht vor, den Ventilkörper mit einem Schlitz zu versehen, der beispielsweise dazu dient, mittels eines Schraubendrehers das Ventil ein- oder auszuschrauben.

Die Einzelteile des Ventils sind in besonders vorteilhafter Weise aus unterschiedlichen Werkstoffen gefertigt. So besteht der Ventilkörper aus Aluminium bzw. einer Aluminiumlegierung. Dies hat den Vorteil, daß die Ventilhaube, welche beispielsweise aus einem korrosionsschutzbehandelten Stahlblech besteht, in einfacher und zuverlässiger Weise an den Ventilkörper angebördelt werden kann.

Die Ventilplatte ist zweckmäßigerweise aus einem Kunststoffspritzgußteil hergestellt. Ein Kunststoffteil bietet die Gewähr dafür, daß in Verbindung mit dem Ventilkörper aus Aluminium das Ventil zuverlässig abdichtet.

Zur sicheren Führung der Ventilplatte in dem Ventilkörper sind weiterbildungsgemäß Führungsflächen an der Ventilplatte vorgesehen. Diese sind beispielsweise sternförmig ausgebildet und zentrieren diese Ventilplatte über die Wandung der Bohrung des Ventilkörpers.

Eine vorteilhafte Ausgestaltung der Ventilhaube ist darin zu sehen, daß diese aus einem Blechstreifen besteht, der eine Form aufweist, die einen sicheren Halt für die Ventilfeder bietet und andererseits seitliche Öffnungen enthält, die groß genug sind, um bei geöffnetem Ventil ein ungehindertes Durchströmen des Öls zu ermöglichen.

Die Erfindung wird nachfolgend anhand von Ausführungsbeispielen näher dargestellt. Es zeigt:
Figur 1 einen Längsschnitt durch ein Umgehungsventil
Figur 2 eine Draufsicht auf das in Figur 1 gezeigte Ventil
Figur 3 einen Teilschnitt durch ein Ventil
Figur 4 die Draufsicht auf das in Figur 3 dargestellte Ventil
Figur 5 einen Längsschnitt durch ein weiteres Umgehungsventil
Figur 6 eine Draufsicht auf das in Figur 5 gezeigte Ventil.

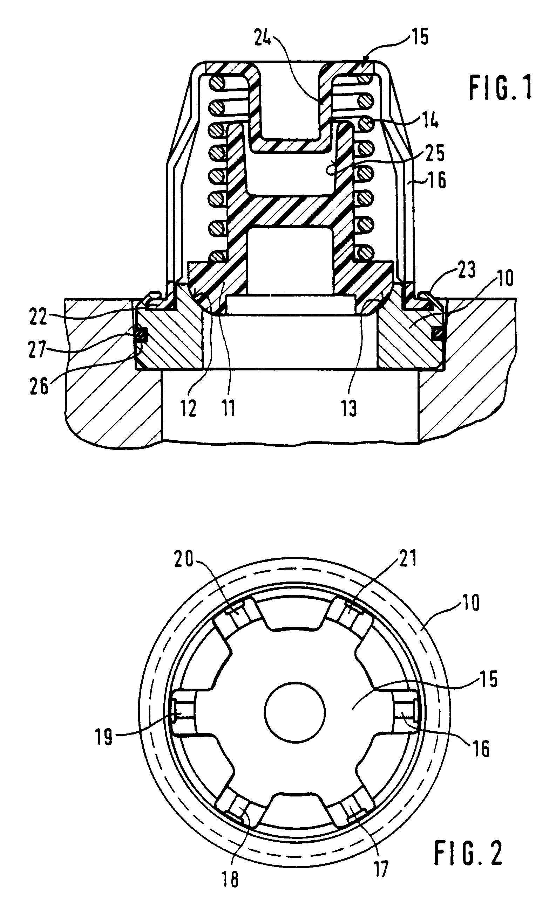

Das Ventil gemäß Figur 1 besteht aus einem Ventilkörper 10, welcher beispielsweise aus einem Aluminiumwerkstoff hergestellt ist, einer Ventilplatte 11, die auf einer kegeligen Ventilfläche 12 des Ventilkörpers 10 aufliegt. Die Ventilfläche 13 der Ventilplatte ist leicht ballig ausgebildet, so daß kleine Toleranzen in den Abmessungen der beiden Ventilflächen sich auf das Dichtungsverhalten nicht nachteilig auswirken. Das Ventil wird über eine Ventilfeder 14 im geschlossenen Zustand gehalten. Diese Ventilfeder liegt einerseits an der Ventilplatte 11 an, andererseits stützt sich diese an einer Ventilhaube 15 ab.

Die Ventilhaube 11 ist ein Kunststoffteil und, wie insbesondere aus Figur 2 zu erkennen ist, in der Form einer Krone gestaltet, d. h. sie besitzt an ihren Seitenflächen sechs T-förmige Verbindungsstege, die mit ihrem Innendurchmesser die radiale Führung der Ventilplatte 11 im unteren Bereich übernehmen. Diese Verbindungsstege vereinigen sich im unteren Bereich zu einem ringförmigen Bördelrand 22, welcher in eine entsprechende Ausnehmung des Ventilkörpers eingelegt wird und durch Einbördeln eines am Ventilkörper 10 befindlichen Randes 23 gehalten wird.

An ihrer Oberseite ist die Ventilhaube 15 mit einem zylinderförmigen Ansatz 24 versehen. Dieser zylinderförmige Ansatz 24 steht in Wirkverbindung mit einer Bohrung 25 an der Ventilplatte derart, daß die Ventilplatte hierdurch radial geführt wird. Gleichzeitig bilden Bohrung und Ansatz auch einen Anschlag für die axiale Bewegung der Ventilplatte.

Die Ventilplatte 11 ist zur Gewichtsreduzierung an ihrer dem Ventilsitz zugewandten Seite mit einer Bohrung versehen und besteht wie die Ventilhaube aus einem Kunststoffspritzgußteil.

Der Ventilkörper weist in seinem äußeren Umfang eine Nut 26 auf. In diese Nut wird ein O-Ring (27) eingelegt, so daß das Ventil in einer Durchflußbohrung dichtend angeordnet werden kann. Die Fixierung des Ventils erfolgt über eine geeignete Klemmvorrichtung, beispielsweise einen Klemmring oder ähnliches.

Die Ventilfederstärke bemißt sich nach dem einzustellenden Öffnungsdruck. Durch Auswahl einer entsprechenden Ventilfeder kann das Ventil für beliebige Öffnungsdrücke angewendet werden.

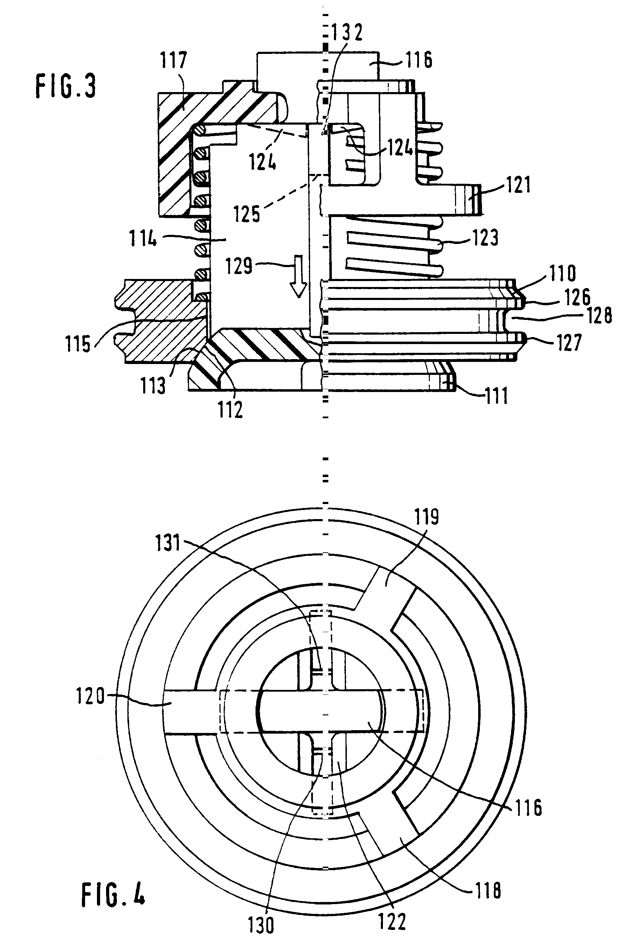

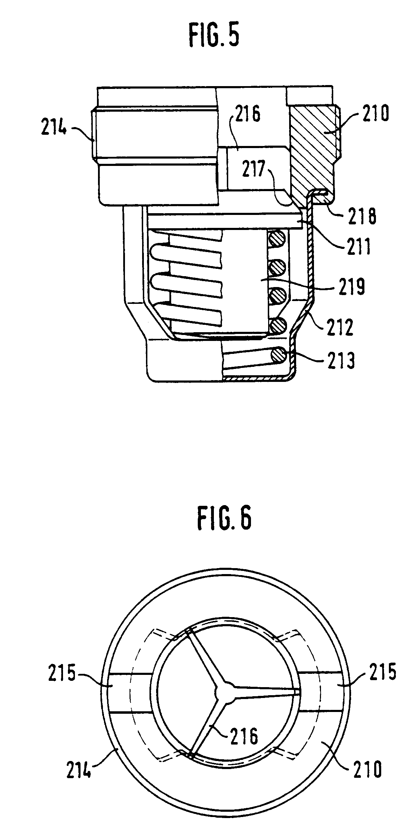

Das Ventil gemäß Figur 3 besteht aus einem Ventilkörper 110, welcher beispielsweise aus Aluminium hergestellt ist und einer Ventilplatte 111, die einen balligen (kugelförmigen) Ventilsitz 112 aufweist, der sich an einer kegeligen Ventilsitzfläche 113 des Ventilkörpers anlegt. Die Ventilplatte 111 weist vier sternförmig angeordnete Führungsrippen 114 auf, die in Figur 4 teilweise gestrichelt dargestellt sind. Der Außendurchmesser der Führungsflächen 114 ist geringfügig kleiner als die Bohrung 115 des Ventilkörpers 110, so daß im Zusammenwirken mit dieser Bohrung eine axialbewegliche Führung der Ventilplatte gebildet wird. Das obere Ende der Führungsflächen 114 ist mit einem T-förmigen Ansatzstück 116 versehen, welches zur Verriegelung einer Endplatte 117 dient.

Diese Endplatte 117 weist drei am Umfang verteilt angeordnete Stege 118, 119, 120 auf. Diese Stege sind mit einem Ring 121 verbunden, so daß eine Endplatte mit mehreren Öffnungen gebildet wird. Diese Endplatte weist, wie in Figur 4 in einer Draufsichtdarstellung gezeigt, einen Schlitz 22 auf, der zum Einführen des Ansatzstücks 116 dient. Bei der Montage des Ventils wird die Ventilplatte 111 in den Ventilkörper 110 eingeschoben. Eine Ventilfeder 123 wird von der Gegenseite über die Führungsflächen 114 der Ventilplatte gestülpt und anschließend die Endplatte 117 mit ihrem Schlitz 122 über das Ansatzstück 116 geführt. Nachdem sich die Endplatte in der axialen Endposition befindet, wird diese durch eine 90°-Drehung verriegelt.

Zur Fixierung der Endplatte 117 in dieser Position befinden sich an deren Unterseite geneigte Rastflächen 124, zwischen denen jeweils der obere Bereich 132 von zwei gegenüberliegenden Führungsrippen 114 einrastet. Der obere Bereich 132 dieser Führungsrippen 114 ist federnd ausgeführt, das heißt, diese Führungsrippen sind durch einen bis zu der gestrichelt dargestellten Linie 125 verlaufenden Längsschlitz 130, 131 von dem mittleren Kern der Führungsrippen 114 getrennt.

Der Ventilkörper 110 weist an seinem äußeren Durchmesser zwei ringförmige Wulstflächen 126, 127 auf. Durch die Ausgestaltung dieser Flächen wird die Möglichkeit geschaffen, diesen Ventilkörper in eine Bohrung mit den entsprechenden Abmessungen einzupressen. Zur Abdichtung der Bohrung kann in die Nut 128 zwischen den Wulstflächen ein O-Ring eingelegt werden.

Die Durchflußrichtung der Flüssigkeit durch das Ventil ist mit dem Pfeil 129 dargestellt. Das Ventil ist im Normalzustand geschlossen und dient bei der Verwendung in einem Schmierkraftfilter als Überdruckventil, das heißt, sofern der Öldruck im Filter einen bestimmten Wert übersteigt, wird die Ventilplatte 111 aufgrund des Überdrucks nach unten bewegt und gibt den Durchlaß zwischen den Ventilflächen 112, 113 frei. Eine Begrenzung dieser Bewegung ist durch den Ring 121 gegeben, der bei voll geöffnetem Ventil an dem Ventilkörper 110 zur Anlage kommt.

Das Ventil gemäß Figur 5 besteht aus einem Ventilkörper 210, welcher beispielsweise aus Aluminium hergestellt ist, einer Ventilplatte 211, die sich in dem Ventilkörper befindet und einen kegeligen Ventilsitz 217 aufweist, der an der entsprechenden Gegenfläche des Ventilkörpers anliegt. Die Ventilplatte 211 verschließt mittels einer Ventilfeder 213 den Durchgang durch den Ventilkörper 210. Die Ventilfeder 213 stützt sich an der Ventilhaube 212 ab. Die Ventilhaube 212 ist beidseitig mit Öffnungen versehen und beispielsweise aus einem korrosionsbeständigen Stahlblech hergestellt. Zur Befestigung der Ventilhaube 212 weist diese an ihren dem Ventilkörper 210 zugewandten Enden Auskragungen auf. Diese Auskragungen dienen in Verbindung mit einem Bördelrand 218 des Ventilkörpers 210 dazu, die Ventilhaube 212 an den Ventilkörper 210 anzubördeln.

Zur Abstützung der Ventilplatte 211 in dem Ventilkörper 210 ist diese mit Führungsflächen 216 versehen. Diese Führungsflächen sind, wie aus Figur 6 ersichtlich, sternförmig ausgebildet und fixieren die Ventilplatte in einer zu dem Ventilkörper zentrischen Lage. Der Ventilkörper 210 weist an seinem äußeren Umfang ein Gewinde 214 auf. Mittels dieses Gewindes kann der Ventilkörper in eine Umgehungsleitung für das Schmieröl eingeschraubt werden. Zum leichten Ein- und Ausschrauben sind an dem Ventilkörper 210 Schlitze 215 angeordnet. Anstelle dieser Schlitze kann der Ventilkörper auch mit anderen Elementen versehen sein, die es ermöglichen, mit einem Werkzeug das Ventil ein- bzw. auszuschrauben.

Die Ventilplatte weist ferner einen Ansatz 219 auf. Dieser dient einerseits zum Führen der Ventilfeder 213, andererseits - in Verbindung mit der Ventilhaube 212 - als Anschlag, um ein übermäßiges Öffnen des Ventils bei erhöhtem Öldruck zu verhindern. Die Ventilfeder 213 ist so bemessen, daß das Ventil bei einem Druck von etwa 2,2 bar öffnet. Selbstverständlich besteht die Möglichkeit, durch entsprechende Wahl der Ventilfeder beliebige Öffnungsdrücke einzustellen.

## Patentansprüche

1. Ventil, insbesondere für das Schmierölfilter einer Brennkraftmaschine mit einer Ventilplatte (11), einem Ventilkörper (10), welcher mit der Ventilplatte (11) zusammenwirkt einer Ventilfeder (14) und einer Ventilhaube (15), wobei die Ventilfeder (14) sich an der Ventilhaube (15) abstützt und auf die Ventilplatte (11) eine Kraft ausübt, zum Abdichten der Öffnung zwischen Ventilplatte (11) und Ventilsitz (12), und daß der Ventilkörper an der dem Ventilsitz zugewandten Stirnseite einen Bördelrand (23) aufweist, an welchem die Ventilhaube angebördelt ist, dadurch gekennzeichnet, daß der Ventilkörper (10) ein zylindrischer Körper ist, daß die Ventilhaube (15) einen umlaufenden Bördelrand aufweist und oberhalb des Bördelrandes Aussparungen vorgesehen sind, die gleichmäßig über den Umfang der Ventilhaube (15) verteilt sind, daß am oberen Ende der Haube eine zylindrische Führung (24) vorgesehen ist, daß die Ventilplatte (11) eine einseitig geschlossene Bohrung (25) enthält, welche der zylindrischen Führung (24) zugewandt ist und in welche die zylindrische Führung hineinreicht.

2. Ventil nach Anspruch 1, dadurch gekennzeichnet, daß der Ventilsitz an der kegeligen Fläche einer zentrischen Bohrung des Ventilkörpers (10) angeordnet ist, daß die Ventilplatte (11) eine leicht ballige Fläche aufweist, welche an der kegeligen Fläche der Bohrung anliegt.

3. Ventil nach Anspruch 1 oder 2, dadurch gekennzeichnet, daß der Ventilkörper (10) aus Aluminium und die Ventilplatte (11) sowie die Ventilhaube (15) aus einem Kunststoffspritzguß hergestellt sind.

4. Ventil nach einem der vorherigen Ansprüche, dadurch gekennzeichnet, daß der Ventilkörper (10) an seinem äußeren Umfang ein Schraubgewinde oder eine Nut (26) zum Einlegen eines O-Rings (27) aufweist.

5. Ventil nach einem der vorherigen Ansprüche 1 bis 3, dadurch gekennzeichnet, daß der Ventilkörper (10) an seinem äußeren Umfang eine Paßfläche aufweist und in die Aufnahme für das Ventil einpreßbar ist.

6. Ventil, insbesondere für das Schmierölfilter einer Brennkraftmaschine, mit einer Ventilplatte (111), einem Ventilsitz (112), welcher an einem Ventilkörper (110) angeordnet ist und mit der Ventilplatte (111) zusammenwirkt, einer Ventilfeder (123), die sich auf dem Ventilkörper (110) abstützt und auf die Ventilplatte (111) eine Kraft ausübt zum Abdichten der Öffnung zwischen Ventilplatte (111) und Ventilsitz (112), wobei die Ventilplatte (111) Führungsflächen (114) aufweist, welche sich in axialer Richtung in die Ventilöffnung des Ventilkörpers (110) erstrecken, das der Ventilplatte (111) gegenüberliegende Ende der Führungsflächen (114) mit einem Ansatzstück (116) zum Befestigen einer Endplatte (117) vorgesehen ist, diese Endplatte (117) eine Anlagefläche für die Druckfeder aufweist und das Ansatzstück (116) die Endplatte (117) an der Ventilplatte (111) fixiert, wobei die Druckseite auf der die Druckfeder aufweisenden Ventilseite ist.

7. Ventil nach Anspruch 6, dadurch gekennzeichnet, daß die Aufnahme mit der Endplatte (117) in Form einer Schnappverbindung ausgestaltet ist und die Endplatte (117) über diese Verbindung axial und radial fixiert.

8. Ventil nach Anspruch 6 oder 7, dadurch gekennzeichnet, daß die Endplatte (117) topfförmig ausgestaltet ist und am Umfang verteilt Durchbrüche aufweist, zum Durchfluß der durch das Ventil hindurchtretenden Flüssigkeit.

9. Ventil, insbesondere für das Schmierölfilter einer Brennkraftmaschine mit einer Ventilplatte (211), einem Ventilsitz (217), welcher mit der Ventilplatte (211) zusammenwirkt, einer Ventilfeder und einer Ventilhaube (212), wobei die Ventilfeder (213) sich an der Ventilhaube abstützt und auf die Ventilplatte (211) eine Kraft ausübt zum Abdichten der Öffnung zwischen Ventilplatte (211) und Ventilsitz (217) und daß der Ventilkörper (210) an der dem Ventilsitz (217) zugewandten Stirnseite einen Bördelrand (218) aufweist, an welchem die Ventilhaube (212) angebördelt ist, dadurch gekennzeichnet, daß der Ventilsitz (217) an der kegeligen Fläche einer zentrischen Bohrung eines Ventilkörpers (210) angeordnet ist, daß die Ventilplatte (211) ebenfalls eine kegelige Fläche aufweist, welche an der kegeligen Fläche der Bohrung anliegt, daß der Ventilkörper (210) ein zylindrischer Körper ist und an seinem äußeren Umfang ein Schraubgewinde (214) aufweist, und daß die Ventilplatte (211) wenigstens drei Führungsflächen (216) aufweist, deren radiale Ausdehnung kleiner als der Durchmesser der Bohrung ist und welche in die Bohrung des Ventilkörpers (210) hineinreichen.

10. Ventil nach Anspruch 9, dadurch gekennzeichnet, daß an der dem Bördelrand (228) gegenüberliegenden Stirnsetie des Ventilkörpers ein Schlitz (215) für ein Lösewerkzeug vorgesehen ist.

11. Ventil nach Anspruch 10, dadurch gekennzeichnet, daß die Führungsflächen (216) sternförmig sind.

12. Ventil nach Anspruch 11, dadurch gekennzeichnet, daß die Ventilhaube (212) aus einem Blechband besteht und nur ein Teil des Umfangs des Ventilkörpers (210) überdeckt.

## Claims

1. Valve, more especially for the lubricating oil filter of an internal combustion engine, including a valve plate (11), a valve body (10) which co-operates with the valve plate (11), a valve spring (14) and a valve hood (15), the valve spring (14) being supported on the valve hood (15) and exerting upon the valve plate (11) a force to seal the opening between valve plate (11) and valve seat (12), and the valve body having a flanged edge (23) on the end face orientated towards the valve seat, the valve hood being flange-mounted on said flanged edge, characterised in that the valve body (10) is a cylindrical body, in that the valve hood (15) has a circumferential flanged edge, and recesses are provided above the flanged edge and are uniformly distributed over the periphery of the valve hood (15), in that a cylindrical guide means (24) is provided at the upper end of the hood, and in that the valve plate (11) includes a unilaterally closed bore (25), which faces towards the cylindrical guide means (24) and into which the cylindrical guide means extends.

2. Valve according to claim 1, characterised in that the valve seat is disposed on the conical face of a central bore in the valve body (10), and in that the valve plate (11) has a slightly spherical face which abuts against the conical face of the bore.

3. Valve according to claim 1 or 2, characterised in that the valve body (10) is formed from aluminium, and the valve plate (11) and the valve hood (15) are formed from a plastics material injection moulding.

4. Valve according to one of the preceding claims, characterised in that the valve body (10) is provided, on its outer circumference, with a screw thread or a groove (26) for the insertion of an O-ring (27).

5. Valve according to one of the preceding claims 1 to 3, characterised in that the valve body (10) includes a bearing surface at its outer circumference and can be pressed into the receiving means for accommodating the valve.

6. Valve, more especially for the lubricating oil filter of an internal combustion engine, including a valve plate (111), a valve seat (112) which is disposed on a valve body (110) and co-operates with the valve plate (111), a valve spring (123) which is supported on the valve body (110) and exerts upon the valve plate (111) a force to seal the opening between valve plate (111) and valve seat (112), wherein the valve plate (111) has guide faces (114) which extend in an axial direction into the valve opening in the valve body (110), the end of the guide faces (114) situated opposite the valve plate (111) is provided with an extension member (116) for the securement of an end plate (117), this end plate (117) has an abutment face for the compression spring, and the extension member (116) secures the end plate (117) on the valve plate (111), the pressure side being on the side of the valve having the compression spring.

7. Valve according to claim 6, characterised in that the receiving means having the end plate (117) is configured in the form of a snap-fitting connection and secures the end plate (117) axially and radially through the intermediary of this connection.

8. Valve according to claim 6 or 7, characterised in that the end plate (117) has a cup-shaped configuration and is provided with openings distributed over the periphery for the fluid, passing through the valve, to flow therethrough.

9. Valve, more especially for the lubricating oil filter of an internal combustion engine, including a valve plate (211), a valve seat (217) which co-operates with the valve plate (211), a valve spring and a valve hood (212), the valve spring (213) being supported on the valve hood and exerting upon the valve plate (211) a force to seal the opening between valve plate (211) and valve seat (217), and the valve body (210) having a flanged edge (218) on the end face orientated towards the valve seat (217), the valve hood (212) being flange-mounted on said flanged edge, characterised in that the valve seat (217) is disposed on the conical face of a central bore in a valve body (210), in that the valve plate (211) also has a conical face which abuts against the conical face of the bore, in that the valve body (210) is a cylindrical body and is provided with a screw thread (214) on its outer circumference, and in that the valve plate (211) has at least three guide faces (216), the radial extension of which is smaller than the diameter of the bore, and said faces extend into the bore in the valve body (210).

10. Valve according to claim 9, characterised in that a slot (215) is provided for a releasing tool on the end face of the valve body situated opposite the flanged edge (218).

11. Valve according to claim 10, characterised in that the guide faces (216) are star-shaped.

12. Valve according to claim 11, characterised in that the valve hood (212) is formed from a sheet metal strip and only covers a portion of the circumference of the valve body (210).

## Revendications

1. Clapet notamment pour l'huile de graissage d'un moteur à combustion interne comportant une plaque de clapet (11), un corps de clapet (10) coopérant avec la plaque de clapet (11), un ressort de clapet (14) et un capot de clapet (15), le ressort (14) s'appuyant contre le capot de clapet (15) pour exercer une force sur la plaque de clapet (11) assurant l'étanchéité de l'ouverture entre la plaque de clapet (11) et le siège de clapet (12) et en ce que le corps de clapet présente un bord rabattu (23) sur la face frontale tournée vers le siège de clapet, sur lequel le capot est rabattu par bordage, clapet caractérisé en ce que le corps de clapet (10) est un corps cylindrique, le capot de clapet (15) présente un bord de bordage périphérique et au-dessus de ce bord, il y a des cavités réparties régulièrement à la périphérie du capot (15), à l'extrémité supérieure du capot il est prévu un moyen de guidage cylindrique (24), la plaque de clapet (11) ayant un perçage (25) fermé d'un côté qui est tourné vers le moyen de guidage cylindrique (24) et dans lequel pénètre ce moyen de guidage cylindrique.

2. Clapet selon la revendication 1, caractérisé en ce que le siège de clapet est prévu sur une surface conique d'un perçage central du corps de clapet (10), la plaque de clapet (11) ayant une surface légèrement bombée qui s'appuie contre la surface conique du perçage.

3. Clapet selon la revendication 1 ou 2, caractérisé en ce que le corps de clapet (10) est en aluminium et la plaque de clapet (11) ainsi que le capot de clapet (15) sont des pièces en matière plastique injectée.

4. Clapet selon l'une des revendications précédentes, caractérisé en ce que le corps de clapet (10) présente à sa périphérie extérieure, un filetage ou une rainure (26) pour recevoir un joint torique (27).

5. Clapet selon l'une des revendications 1 à 3, caractérisé en ce que le corps de clapet (10) présente à sa périphérie extérieure une surface ajustée qui peut être pressée dans le logement du clapet.

6. Clapet notamment de filtre à huile d'un moteur à combustion interne comportant une plaque de clapet (111), un siège de clapet (112) recevant un corps de clapet (110) et coopérant avec une plaque de clapet (111) un ressort de clapet (123) qui s'appuie sur le corps de clapet (110) en exerçant sur la plaque de clapet (111) une force pour assurer l'étanchéité de l'ouverture entre la plaque de clapet (111) et le siège de clapet (112), la plaque de clapet (111) ayant des surfaces de guidage (114) qui s'étendent dans la direction axiale dans l'ouverture de clapet du corps de clapet (110), l'extrémité des surfaces de guidage (114) en regard de la plaque de clapet (111) ayant une pièce de prolongement (116) pour la fixation d'une plaque d'extrémité (117), cette plaque d'extrémité (117) ayant une surface d'appui pour le ressort de compression et la pièce de prolongement (116) bloquant la plaque d'extrémité (117) contre la plaque de clapet (111), le côté de pression étant le côté du clapet correspondant au ressort de compression.

7. Clapet selon la revendication 6, caractérisé en ce que le logement pour la plaque d'extrémité (117) est réalisé sous la forme d'une liaison par encliquetage et la plaque d'extrémité (117) se bloque axialement et radialement par ce moyen de liaison.

8. Clapet selon l'une des revendications 6 ou 7, caractérisé en ce que la plaque d'extrémité (117) est en forme de pot et comporte des passages répartis à sa périphérie pour permettre le passage du liquide traversant le clapet.

9. Clapet notamment pour le filtre à huile d'un moteur à combustion interne comportant une plaque de clapet (211), un siège de clapet (217) coopérant avec la plaque de clapet (211), un ressort de clapet et un capot de clapet (212), le ressort de clapet (213) s'appuyant contre un capot de clapet en exerçant une force sur la plaque de clapet (211) pour rendre étanche l'ouverture entre la plaque de clapet (211) et le siège de clapet (217) et en ce que le corps de clapet (210) présente sur sa face frontale tournée vers le siège de clapet (217), un bord de bordage (218) sur lequel est rabattu le capot de clapet (212), clapet caractérisé en ce que le siège de clapet (217) est prévu sur la surface conique d'un perçage centré d'un corps de clapet (210), la plaque de clapet (211) ayant également une surface conique qui s'appuie contre la surface conique du perçage et le corps de clapet (210) est un corps cylindrique avec un filetage (214) à sa périphérie extérieure et la plaque de clapet (211) présente au moins trois surfaces de guidage (216), dont l'extension radiale est inférieure au diamètre du perçage et qui arrive jusque dans le perçage du corps de clapet (210).

10. Clapet selon la revendication 9, caractérisé en ce que sur la face frontale du corps du clapet opposée au bord de bordage (218) est prévue une rainure (215) pour un outil de desserrage.

11. Clapet selon la revendication 10, caractérisé en ce que les surfaces de guidage (216) sont en forme d'étoile.

12. Clapet selon la revendication 11, caractérisé en ce que le capot de clapet (212) est formé d'un ruban de tôle et selon une partie de la périphérie du corps de clapet (212) est recouverte.
